# EUROPEAN PATENT APPLICATION

(11) **EP 3 825 426 A1**
(43) Date of publication of application: **26.05.2021**
(21) Application number: 19383030.4
(22) Date of filing: 22.11.2019
(51) Int. Cl.: C22B 7/04, A62D 3/36, C01F 7/00, C22B 21/00

(54) **PROCESS FOR TRANSFORMING SECONDARY ALUMINIUM OXIDE INTO ALTERNATIVE RAW MATERIAL AND USES THEREOF**

(71) Applicant: Befesa Aluminio, S.L., 48950 Erandio, BIZKAIA (ES)
(72) Inventor: SÁENZ DE TEJADA PICORNELL, FRANCISCO, 48950 ASUA-ERANDIO (VIZCAYA) (ES); MONTERO GARCÍA, JESSICA, 48950 ASUA-ERANDIO (VIZCAYA) (ES); ARIAS ERGUETA, PEDRO LUIS, 48013 BILBAO (ES); CAMBRA, JOSÉ F., 48013 BILBAO (ES)
(74) Representative: Clarke Modet & Co.

(57) **Abstract**

The present invention consists of a secondary aluminium oxide refining process to transform it into an alternative raw material to non-metallurgical bauxite. The process of the invention is based on the refining of secondary aluminium oxide, eliminating the fluoridated salts present, mainly sodium and potassium, with a strong acid under moderate conditions, producing gaseous hydrogen fluoride. The invention also relates to a refined product obtained from the reaction of secondary aluminium oxide with a sulfuric acid solution and to the use thereof as raw material for the production of primary aluminium and refractory and abrasive materials.

## Description

### TECHNICAL SECTOR

The present invention relates to the aluminium recycling sector, specifically to methods for eliminating unwanted impurities and compounds in byproducts of the valorization process of salt slag from aluminium industry.

### BACKGROUND OF THE INVENTION

Aluminium is the second most widely used metal after iron, the features thereof making it useful in various industries such as aerospace, construction, automotion, architecture, inter alia. It is currently produced from alumina or secondarily from hydrometallurgical processes or aluminium scrap and aluminium wastes. These processes generate different byproducts with varying physical and chemical features¹, wherein the value thereof is conditional upon the quantity and type of impurities they contain.

In the recovery process of secondary aluminium, slag is obtained which is generally a mixture of metal in elemental form and non-metallic materials (melting salts and oxides). The slag obtained from this process is slag with a low metal content (between 5% and 20% of the total weight), commonly known as secondary slag, black slag, dry slag, or black dross (EWC code 100309). Due to the composition thereof, this waste is classified as hazardous, due to which it must be reused and recycled to prevent it from being dumped in landfills.

Various industrial treatments are currently described for recycling and reusing aluminium slag, recovering high value-added products and other byproducts^{1,2}. For example, it is described that aluminium oxide present in secondary slag (which normally contains a high percentage, approximately 50%) can be recovered using strong acids such as H₂SO₄, HCl and HNO₃³⁻⁸, by means of a hydrometallurgical process in acid medium. Most of the references found use sulfuric acid as a reagent, at high concentrations and temperatures, with the aim of extracting the maximum amount of aluminium present in the solid by means of leaching, and later recovering the liquor in the form of different compounds. With the expounded treatments, the extraction of the aluminium present in the aluminium slag exceeds 85% in all cases.

Additionally, the hydrometallurgical process of secondary slag in basic medium is described, based on the dissolution of the metal aluminium and aluminium oxide present in a concentrated NaOH solution at high temperatures and at atmospheric pressure or high pressures⁹⁻¹⁰. The exposure of aluminium slag to a treatment under alkaline conditions leads to the leaching of the aluminium and the salts, with the subsequent formation of alumina and other byproducts.

Both hydrometallurgical treatments leach the aluminium present (metallic and in the form of hydroxides or oxides), giving rise to the Al³⁺ ion which is combined with different anions present in the medium to give rise to different recoverable compounds. In this regard, prior to any hydrometallurgical treatment the soluble salts must be removed from the aluminium slag, mainly NaCl and KCl, which, although found in low proportions (approximately 8% by weight of the total weight), may affect the speed of the leaching reaction and, therefore, the yield of the process.

Pyrometallurgical processes for recovering the aluminium present in secondary aluminium slag are also described. Melting salts are used in these processes which, while favouring the recovery of the metal, involve some losses of aluminium. Document US2018369827 discloses a system for recovering aluminium and recycling secondary slag by combining a heating chamber for melting the metal and an Eddy current system typical of a Vortex system. In turn, document EP3168315 focuses on equipment that makes it possible to recover non-ferrous metals from hot slag, not exclusively limited to aluminium, but being preferred. Its technology is based on the compression of hot slag.

The most widespread technology for treating secondary slag is melting in rotary furnaces. This type of technology is also used to treat aluminium industry waste coming from machining such as aluminium shavings or trimmings or pieces at the end of its useful life as scrap.

Pyrometallurgical treatments of secondary slag together with this other aluminium waste generate other waste known as salt slag (EWC code 100308). Salt slag has a metallic aluminium content of between 5%-7% and is classified as hazardous because it has soluble salts and produces toxic and explosive gases in the presence of moisture. The foregoing makes the treatment thereof necessary for reuse and recycling.

Salt slag, obtained from the secondary aluminium industry by aluminium slag and scrap melting, can also be treated by means of hydrometallurgical treatments¹¹. After a first leaching of the chloride ions and part of the sodium and potassium ions with water, the residual aluminium can be recovered with a leaching stage with concentrated NaOH. The amount of salts, mainly NaCl and KCI, present in the salt slag is approximately 50% by weight, due to which an intensive dissolution or leaching stage with water is obligatory to remove these salts, which will be interferents and will complicate the subsequent hydrometallurgical stage. The toxic gases (NH₃, CH₄) that are generated when the salt slag comes into contact with the water due to the presence of its components (AlN₃; AlC₃...), complicate the removal of the soluble salts using water, if the relevant measures are not taken for capturing and subsequently treating the gases. To avoid this problem, variants of these reactions which use water saturated with CO₂, which acts as an absorbent for the gases formed¹², have been studied.

However, the most widespread industrial treatments for salt slag consist of a series of sequential stages that comprise milling, sieving (to recover the metal present), leaching with water at ambient temperature or high temperature and pressure (to dissolve the salt in water), and evaporation and filtration to recover the salt. The insoluble solid resulting from the final filtration, known as secondary aluminium oxide, is formed mainly of aluminium oxide and other oxides of alloy elements and can be used in different applications such as cements, ceramics, construction, rockwool, inter alia¹³. The salt slag is valorised through this process, obtaining metallic aluminium, melting salts and secondary aluminium oxide, all products used in the market.

The secondary aluminium oxide obtained from these processes has a high Al₂O₃ content and a composition similar to the mineral bauxite, which enhances its use as raw material in the production of primary aluminium and refractory and abrasive materials. However, it also contains impurities, mainly halogens (fluoride and chloride in different species) and sodium and potassium melting compounds, which prevent the direct use thereof in such processes and require the implementation of prior treatments for conditioning the secondary aluminium oxide.

The hydrometallurgical processes proposed in literature for treating aluminium slag and salt slag, or for solids of different origins, describe the use of strong acids to recover valuable compounds. The production of alumina from fly ash by means of treatments with strong acids has been disclosed in documents CN106477609A and CN106477606A (sulfuric acid). In both documents the process is carried out at significantly higher temperatures of up to 350°C and concentrated sulfuric acid. Document WO2014174527A1 discloses the recovery of alpha alumina from secondary slag through a series of stages, among which the first step is an acid leaching stage and subsequent stages with aqueous ammonium solution until the precipitation of aluminium hydroxide which, once calcined, will be transformed into alpha alumina. When the preferred acid is sulfuric acid, the conditions are 30%-50% (v/v), with a temperature comprised between 170-230°C and a long treatment time, between 10-15 hours. The state of the art discloses a method for extracting alumina from secondary slag by means of a treatment with sulfuric acid in concentrations comprised between 15%-40% (v/v) at a temperature of 90°C during treatment times of 3h^{3,4}. This study expounds the effect of the salts in the form of chlorides in the dissolution of alumina, concluding that when the slag is subjected to a washing pretreatment that removes the salts, a smaller amount of acid is required for leaching. In both cases amounts greater than 85% are leached. Increasing the concentration of acid to up to 50% (v/v) makes it possible to increase the dissolution of alumina to 95%. The reactions proposed and carried out in the secondary slag and the sulfuric acid in these concentrations are:
*Al*₂*O*₃ + 3*H*₂*SO*₄ → *Al₂*(*SO₄*)3 + 3*H*₂*O*
*Al*₄*C*₃ + 6*H*₂*SO*₄ → 3*CH*₄ + 2*Al*₂(*SO*₄)
2*AlN* + 4 *H*₂*SO*₄ → *Al*₂(*SO*₄)₃(*NH*₄)₂*SO*₄

Also, document US9382600B2 discloses the recovery of aluminium chloride from primary aluminium industry waste, specifically red mud by means of treatment with HCI at high temperatures and concentrations. HCI with a concentration by weight of 25% and 45% at temperatures between 125°C and 225°C is preferred. Document US9771633B2 protects an acid treatment of red mud with aliphatic carboxylic acids with at least three carbon atoms.

Document US7651676 discloses the treatment of waste called "aluminium dross residues" obtained from the treatment of secondary aluminium slag, after a first stage of partial removal of the metal aluminium, to obtain aluminium chloride and subsequently transform it into alumina in a double leaching process with HCI and sulfuric acid. The first leaching stage with hydrochloric acid is carried out at concentrations comprised between 10% and 37% by weight, at temperatures between 20°C and 120°C. The resulting solid is subjected to a second leaching step with sulfuric acid that makes it possible to convert the remaining aluminium atoms to aluminium sulfates that reside in the liquid. This second stage is carried out with the acid at a concentration comprised between 50% and 98% by weight at temperatures between 20°C and 325°C.

Also, document EP1060126A4 discloses the recovery of products from the non-metallic product (NMP), specifically hydrated alumina (Al(OH)₃); magnesium oxide (MgO) and magnesium aluminium spinel (MgAl₂O₄) by means of a digestion of the product with concentrated acids: sulfuric, hydrochloric, hydrofluoric, nitric, phosphoric or a mixture thereof, preferably sulfuric acid at high concentrations and temperatures. The ultimate aim of the document is to separate them individually, thereby increasing their market value. The document includes a first acid digestion stage, with sulfuric acid in a concentration of 93%-98% in a L/S ratio of 0.5/2.0 and preferred temperatures between 35°C and 250°C, typically between 60°C and 135°C. Up to 50% to 65% of NMP can be dissolved in acid solution in a typical acid digestion. The resulting solid consists of magnesium aluminium spinel the hydrated aluminium (Al(OH)₃) and magnesium oxide (MgO) is selectively recovered from the digested liquid, varying the pH of the solution between 5-7.5.

Therefore, the processes currently described in the state of the art are inadequate and irrelevant to condition the secondary aluminium oxide as desired for use as an alternative raw material to bauxite. The state of the art suggests the use of strong acids under severe temperature and/or concentration conditions in the solid leaching or digestion stage, with the aim of leaching most of the aluminium present in the material in order to subsequently recover the liquor in the form of aluminium hydrate or oxides thereof. Specifically, document USS7651676 cites that with its methodology at least 50%, at least 70% or approximately 80% to 95% by weight of the aluminium atoms present in the material can be obtained in the form of alumina.

This is how the inventors of the present invention, after extensive and exhaustive experiments, have developed a secondary aluminium oxide treatment process that makes it possible to eliminate impurities and unwanted compounds, such as melting salts and halogens, and the conditioning of the material for use as an alternative raw material to non-metallurgical bauxite. In the present invention, the treatment is carried out under moderate temperature and acid concentration conditions, particularly preventing the amount of leached aluminium with the treatment from being greater than 10%.

### DESCRIPTION OF THE INVENTION

Therefore, in a first aspect, the present invention consists of a secondary aluminium oxide refining process to transform it into an alternative raw material to non-metallurgical bauxite. The process consists of a hydrometallurgical treatment that eliminates unwanted impurities and compounds such as melting salts and halogens.

The process of the invention is based on the refining of secondary aluminium oxide, eliminating the fluoridated salts present, mainly sodium and potassium, with a strong acid under moderate conditions, producing gaseous hydrogen fluoride. The hydrogen fluoride becomes detached through the gas stream, such that it is separated from the solid.

In the process of the invention, initial secondary aluminium oxide from the valorisation of salt slag is used with a moisture content between 10% and 30% and a composition typically as included in table 1 below:

**Table 1. Composition of secondary aluminium oxide on a dry basis**

| **Component** | **Content (%)** |
|---|---|
| Al₂O₃ | 60-70 |
| Fe₂O₃ | <2 |
| SiO₂ | 4-12 |
| MgO | 5-10 |
| Na₂O +K₂O | 0.5-5 |
| CaO | 1.5-3 |
| F | 0.8-10 |
| Cl- | 0.2-1.0 |
| Metal Al | <2.0 |
| LOI (Lost of Ignition) | 10-12 |

As can be observed, the initial secondary aluminium oxide has a high Al₂O₃ content, low proportion of salts (less than 5% by weight) and low metal aluminium content (less than 2%). It is grey and has a particle size of D₁₀≤10 µm, D₅₀= 50 µm and D₉₀≤5500 µm. The main crystalline phases present in the secondary aluminium oxide are corundum, magnesium aluminium spinel, aluminium hydroxides (in different forms, gibbsite, boehmite, bayerite, inter alia).

The process of the present invention consists of making the solid secondary aluminium oxide react in a receptacle with a strong inorganic acid solution with p*K*ₐ<1, and which is completely dissociated in aqueous solution, preferably sulfuric acid. The acid solution is previously prepared at a concentration between 0.5 and 2.5 M., and is adjusted in accordance with the moisture content of the secondary aluminium oxide such that it is added in the reaction at a concentration between 5% and 10%. Preferably, the solid/liquid (weight/weight) ratio in the reaction receptacle ranges between 1/2 and 1/4. Optionally, the reaction is carried out with forced stirring.

The reaction described in the proposed process is carried out under moderate temperature conditions, between ambient and 70°C, preferably 50°C to 70°C. The reaction time is between 30 and 90 minutes, preferably between 45 and 90 minutes, which is enough time to ensure the effectiveness of the process, more preferably 45 minutes. The ambient temperature is defined in the range between 5°C and 32°C.

Therefore, the treatment proposed in the present invention is carried out under moderate temperature and acid concentration conditions, preferably sulfuric acid, particularly preventing the amount of leached Al³⁺ aluminium with the treatment from being greater than 10%.

As opposed to the state of the art, the present invention is based on the refining of the secondary aluminium oxide, eliminating the fluoridated salts present, mainly sodium and potassium, with a strong acid under moderate conditions to produce gaseous hydrogen fluoride. The hydrogen fluoride becomes detached through the gas stream, such that it is separated from the solid.

The inventors have defined that when the refining treatment is carried out under severe concentration and temperature conditions, the fluoridated salts present in the secondary aluminium oxide are removed in the form of AlFₓ complexes and not as gaseous hydrogen fluoride. Document EP94919520 discloses a method for extracting fluoride from minerals or mineral species, based on the premise that the strength of the bond between Al³⁺ and F⁻ is several orders of magnitude greater than the strength of the bond between the fluoride and the minerals, providing the directive force for removing it. Therefore, taking into account that there are no kinetic, chemical, thermodynamic or solubility restrictions for forming fluoride complexes, the contact between a mineral and a mineral species containing fluoride and a leached solution containing a metal or metalloids will give rise to the formation of a soluble fluoride complex and, consequently, makes it possible to remove the fluoride from the mineral or mineral species. The typical reaction of this process is:

*Mineral* - *F* + (*metal*(*M*))^{*y*+} ↔ (*M* - *F*)^{(*y*-1)} + *Soluble mineral complex*

This methodology prefers the metal ion or metalloid to be aluminium, possibly giving rise, but not limited to, the following reactions:

*Mineral* - *F* ↔*^{Diluted acid} Mineral* + *HF* ↔*^{Diluted acid} H*⁺ + *F⁻*

*Al*³⁺ + *F⁻* ↔ (*AlF*)²⁺

(*AlF*)²⁺ + *F⁻* ↔ (*AlF*₂)⁺

The global reaction is:

*Al*^{*3*+} + *Mineral* - *F* ↔^{*H*+} (*AlF*)*^{nI}* + *mineral*

As indicated by the document, it is preferable not to use anions that form soluble complexes with the metal to favour the formation of the AlFₓ complex, such as for example the sulfate, chloride and other soluble anions. Additionally, the molecular proportion AI:F must be comprised between 1:1 and 5:1, preferably 2:1 to 5:1, which should prevent the formation of Al-F precipitates that could slow down the fluoride extraction reactions due to the formation of an impermeable deposit on the surface. The severe conditions lead to an optimal Al:F ratio in the medium, thereby ensuring the formation of these complexes instead of HF. However, when the present inventors tested the removal of the fluoride from the secondary aluminium oxide under moderate conditions through the formation of AlFₓ complexes, the results were not favourable. Not only is the AI:F ratio limiting in this process, when the anion is a sulphate and the acid is, for example, sulfuric acid, but the solution must have a pH comprised between 3.0 and 4.3, because the aluminium is soluble as an aluminium sulphate and the fluoride can exist in the free ionic state F⁻. At lower pHs, the balance changes in favour of the combination of fluoride ions with the hydrogen ions to form undissociated hydrogen fluoride, reducing the availability of fluoride ions, thereby slowing down the speed of extracting the fluoride from the minerals.

The present invention that discloses the refining of the secondary aluminium oxide is preferably carried out at a pH lower than 3.0. At these pH values, the aluminium that can be dissolved in the medium is soluble as aluminium sulphate, and the fluoride is present in the free ionic state of F⁻. Under the moderate conditions of the process proposed in the present invention, the formation of HF is assured against any other fluoride species.

Some of the theoretical reactions that could take place in the reaction of the fluoridated compounds present in secondary aluminium oxide when sulfuric acid is used are as follows:

2*Na₃ALF₆* + 12*H₂SO₄* → 12*HF* + *Al₂(SO₄)* + 6*NaSO₄* + 3*SO₂* + 6*H₂O*

*CaF₂* + *H₂SO₄* → *CaSO₄* + 2*HF*

*(NH₄)₂SiF₆* + *H₂SO₄* → *(NH₄)₂SO₄* + 2*HF*

*K₂SiF₆* + *H₂SO₄* → *K₂SO₄* + 2*HF*

*Na2SiF6* + *H₂SO₄* → *Na₂SO₄* + 2*HF*

*2NaF* + *H₂SO₄* → *Na₂SO₄* + 2*HF*

*2KF* + *H₂SO₄* → *Na₂SO₄* + 2*HF*

Thus, in the process of the present invention, a solid part, a residual liquid part and a gas stream comprising hydrogen fluoride are initially obtained. In a stage subsequent to the reaction stage, the separation of the solid part and the residual liquid part is carried out by filtration, optionally using filter presses, obtaining a refined solid part having suitable features for use as an alternative raw material to the mineral bauxite. Lastly, the gas stream is directed towards a gas treatment circuit by dilution, the residual liquid part is directed towards a treatment system for neutralisation and the refined solid part is stored for subsequent use as raw material.

The refined solid part obtained by means of the previously described process preferably has a composition as indicated in table 2.

**Table 2. Composition of the refined solid part obtained by means of the process of the invention**

| **Component** | **Content (%)** |
|---|---|
| Al₂O₃ | 65.0-78.0 |
| Fe₂O₃ | 0.5-2.0 |
| SiO₂ | 4.0-11.0 |
| MgO | 5.0-10.0 |
| Na₂O | 0.25-0.70 |
| K₂O | 0.1-0.3 |
| CaO | 0.4-3.0 |
| F | 0.3-0.9 |
| Cl- | 0.03-0.5 |

Even more preferably, the refined solid part obtained by means of the previously described process preferably has a composition as indicated in table 3.

**Table 3. Preferred composition of the refined solid part obtained by means of the process of the invention**

| **Component** | **Content (%)** |
|---|---|
| Al₂O₃ | 65.0-78.0 |
| Fe₂O₃ | 0.62-2.0 |
| SiO₂ | 4.0-9.0 |
| MgO | 5.0-7.0 |
| Na₂O | 0.25-0.70 |
| K₂O | 0.1-0.3 |
| CaO | 1.5-3.0 |
| F | 0.3-0.9 |
| Cl- | 0.03-0.1 |

The treatment system of the residual liquid part consists of a treatment with lime in a range comprising from the stoichiometric ratio to a stoichiometric excess of 10% during a contact time of 1-2 hours, in a receptacle under stirring and without external heat supply. After the treatment, the resulting liquor can be recirculated and used in the system as mother liquor. The solid product obtained, monocyclic CaSO₄·2H₂O, is stored for use as a soil additive, specifically as a source of nutrients or modifier of the nature of the soil.

Through the process of the present invention a refined product is obtained comprising aluminium oxide in a higher percentage than 65%, Na₂O in a percentage between 0.25% and 0.70%, K₂O in a percentage between 0.1 and 0.3%, F in a percentage between 0.3% and 0.9%, and Cl- in a percentage between 0.03% and 0.5%, for a total percentage of 100%.

The refined product obtained through the present invention can be used as raw material for the production of primary aluminium and refractory and abrasive materials.

### BRIEF DESCRIPTION OF THE FIGURES

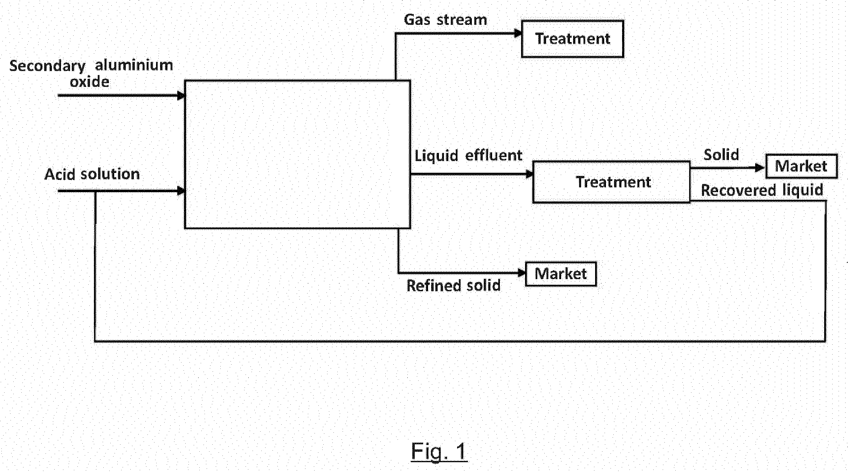

**Figure 1** shows a block diagram of the process proposed in the present invention.

### EXAMPLES

The examples indicated in the present document are aimed at illustrating the invention without limiting its scope.

### Example 1.

Different batches of secondary aluminium oxide with a moisture content of 30.0% were subjected to hydrometallurgical treatment with sulfuric acid. The composition of secondary aluminium oxide used is indicated in table 4 below:

**Table 4. Original composition of secondary aluminium oxide (percentages by weight)**

| Al₂O₃ | SiO₂ | Fe₂O₃ | CaO | MgO | Na₂O | K₂O | F | Cl- | LOI* |
|---|---|---|---|---|---|---|---|---|---|
| 68.9 | 6.6 | 1.6 | 1.9 | 6.9 | 1.2 | 0.4 | 0.9 | 0.3 | 10.1 |

The tests were conducted under different concentration, solid/liquid ratio and temperature conditions. All the tests were conducted under continuous stirring and during a reaction time of 45 minutes. The conditions of each test are listed in table 5.

**Table 5. Test conditions**

| **Test #** | **[H₂SO₄] (M)** | **Temperature (°C)** | **Solid/liquid ratio** |
|---|---|---|---|
| Test 1-1 | 0.5 | 50 | 1/4 |
| Test 1-2 | 0.5 | 50 | 1/4 |
| Test 1-3 | 0.7 | 70 | 1/4 |
| Test 1-4 | 0.7 | Ambient (without external heat supply) | 1/2 |
| Test 1-5 | 0.5 | Ambient (without external heat supply) | 1/2 |
| Test 1-6 | 0.7 | Ambient (without external heat supply) | 1/4 |
| Test 1-7 | 0.7 | Ambient (without external heat supply) | 1/3 |
| Test 1-8 | 0.5 | Ambient (without external heat supply) | 1/2 |

After the reaction, filtration was performed to separate the refined solid material obtained from the residual effluent. The composition of the refined solid material in each of the tests is included in table 6.

**Table 6. Composition of the refined solid material obtained by means of the process of the invention**

| **Test #** | **Al₂O₃** | **SiO₂** | | **Fe₂O₃** | **CaO** | **MgO** | **Na₂O** | **K₂O** | **F** | **Cl** | **LOI** |
|---|---|---|---|---|---|---|---|---|---|---|---|
| Original | 68.9 | 6.6 | | 1.6 | 1.9 | 6.9 | 1.2 | 0.4 | 0.9 | 0.30 | 10.1 |
| Test 1-1 | 70.6 | 6.3 | | 0.8 | 1.8 | 6.8 | 0.6 | 0.2 | 0.6 | 0.06 | 10.0 |
| Test 1-2 | 69.9 | 5.9 | | 0.9 | 1.7 | 6.5 | 0.5 | 0.2 | 0.6 | 0.05 | 11.0 |
| Test 1-3 | 70.7 | 6.0 | | 0.9 | 1.7 | 6.6 | 0.6 | 0.2 | 0.8 | 0.05 | 10.0 |
| Test 1-4 | 70.6 | 5.8 | | 0.9 | 1.7 | 6.8 | 0.5 | 0.2 | 0.8 | 0.05 | 9.8 |
| Test 1-5 | 69.9 | 7.4 | | 1.1 | 1.6 | 5.8 | 0.7 | 0.2 | 0.6 | 0.05 | 9.9 |
| Test 1-6 | 71.1 | 6.1 | | 0.8 | 1.5 | 6.8 | 0.5 | 0.2 | 0.7 | 0.05 | 9.7 |
| Test 1-7 | 69.9 | 5.9 | | 0.9 | 1.7 | 6.5 | 0.5 | 0.2 | 0.8 | 0.05 | 11.0 |
| Test 1-8 | 70.8 | 6.4 | | 1.3 | 1.8 | 6.3 | 0.7 | 0.2 | 0.8 | 0.05 | 9.1 |

### Example 2.

Different batches of secondary aluminium oxide with the same moisture content were subjected to hydrometallurgical treatment with sulfuric acid. In each test, only the concentration and temperature conditions were varied in the treatment of the refined solid material of the secondary aluminium oxide with sulfuric acid, and the percentage of leached aluminium was measured in each. In all the tests, reaction time was 90 minutes and a S/L ratio of 1/4 was used. The results are reported in table 7 below.

**Table 7. Percentage of leached aluminium**

| **Test #** | **Concentration (M)** | **Temperature (°C)** | **% leached Al³⁺** |
|---|---|---|---|
| Test 2-1 | 0.5 | ambient (*) | 3.3 |
| Test 2-2 | 0.5 | 50 | 6.6 |
| Test 2-3 | 2.5 | 100 | 61.6 |

| | | | |
|---|---|---|---|
| (*) is understood to be ambient temperature without external heat supply | | | |

The results make it possible to verify that, under the preferred conditions of the present invention, the amount of leached aluminium (present in the liquid effluent) is less than 10%.

### Example 3.

The treatment with secondary aluminium oxide was carried out with sulfuric acid under the conditions proposed in the present invention (concentration 0.5 M, temperature 50°C, S/L ratio 1/4 and time 45 minutes. Table 8 shows the pH values obtained at different reaction times.

**Table 8. pH values during the process of the present invention when sulfuric acid is used under the proposed conditions.**

| **Stage** | **pH** |
|---|---|
| H₂SO₄ solution | <1 |
| Mixture of secondary aluminium oxide (SAO) / water | 9.3 |
| SAO+H₂SO₄ at t=0 (min) | 0.9 |
| SAO+H₂SO₄ at t=5 (min) | 1.2 |
| SAO+H₂SO₄ at t=20 (min) | 2.2 |
| SAO+H₂SO₄ at t=30 (min) | 2.4 |
| SAO+H₂SO₄ at t=45 (min) | 2.7 |

| | |
|---|---|
| SAO = secondary aluminium oxide | |

### BIBLIOGRAPHY

¹ Mahinroosta M, Allahverdi A (2018) Journal of Environmental Management 223, 452-468.
² Meshram A, Singh KK (2018) Resources, Conservation and Recycling 130, 95-108.
³ Dash B, Das BR, Tripathy BC, Bhattacharyaa IN, Dasa SC (2008) Hydrometallurgy 92, 48-53.
⁴ Das BR, Dash B, Tripathy BC, Bhattacharya IN, Das SC (2007) Mineral engineering 20, 252-258.
⁵ Amer AM (2002) Journal of the Minerals, Metals & Materials Society 54, 72-75.
⁶ How LF, Islam A, Jaafar MS, Taufiq-Yap YH (2017) Waste and Biomass Valorization 8, 321-327.
⁷ David E, Kopac J (2012) Journal of Hazardous Materials 209-210, 501-509.
⁸ Amer AM (2010) Journal of the Minerals, Metals & Materials Society 62, 60-63.
⁹ Tsakiridis PE, Oustadakis P, Agatzini-Leonardou S (2013) Journal of Environmental Chemical Engineering 1, 23-32.
¹⁰ Jafari NH, Stark TD, Roper R (2014) Journal of Hazardous, Toxic, and Radioactive Waste 18*.*
¹¹ Bruckard W, Woodcock JT (2007) Minerals Engineering 20, 1376-1390.
¹² Li P, Guo M, Zhang M, Teng L, Seetharaman S (2012) Metallurgical and Materials Transactions B 43, 1220-1230.
¹³ Tsakiridis PE (2012) Journal of Hazardous Materials 217-218, 1-10.

## Claims

1. A secondary aluminium oxide refining process obtained from the valorisation of salt slag produced in the recovery of the aluminium by melting aluminium scrap and waste, **characterised in that** it comprises the steps of:
i. making the solid secondary aluminium oxide react with sulfuric acid in a concentration of 0.5-2.5 M in water, at a temperature between ambient and 70°C to obtain a solid part and a residual liquid part; and
ii. separating the residual liquid part by filtration to obtain a refined solid part.

2. The process of claim 1, **characterised in that** the initial secondary aluminium oxide has a moisture content between 10% and 30%.

3. The process, according to any of claims 1 or 2, **characterised in that** the solid/liquid ratio in the reaction is between 1/2 and 1/4.

4. The process of any of claims 1 to 3, **characterised in that** stage i. is carried out under constant stirring and maintaining a temperature between 50°C and 70°C.

5. The process of any of claims 1 to 4, **characterised in that** stage i. is carried out for 30-90 minutes.

6. The process of any of claims 1 to 5, **characterised in that** stage i. is carried out at a pH lower than 3.0.

7. The process of any of claims 1 to 6, **characterised in that** the refined solid part obtained in stage ii. comprises aluminium oxide in a percentage higher than 65%, Na₂O in a percentage between 0.25% and 0.70%, K₂O in a percentage between 0.1 and 0.3%, F in a percentage between 0.3% and 0.9%, and Cl- in a percentage between 0.03% and 0.5%, for a total percentage of 100%.

8. A refined product obtained from the reaction of secondary aluminium oxide with a sulfuric acid solution, **characterised in that** it comprises aluminium oxide in a percentage higher than 65%, Na₂O in a percentage between 0.25% and 0.70%, K₂O in a percentage between 0.1 and 0.3%, F in a percentage between 0.3% and 0.9%, and Cl- in a percentage between 0.03% and 0.5%, for a total percentage of 100%.

9. A use of the product of claim 8 as raw material for the production of primary aluminium and refractory and abrasive materials.

10. A use of the refined solid part of claim 7 as raw material for the production of primary aluminium and refractory and abrasive materials.
